# EUROPEAN PATENT SPECIFICATION

(11) **EP 3 220 173 B1**
(45) Date of publication and mention of the grant of the patent: **10.06.2020**
(21) Application number: 17158858.5
(22) Date of filing: 02.03.2017
(51) Int. Cl.: G02B 6/38

(54) **OPTICAL CONNECTOR**
OPTISCHER VERBINDER
CONNECTEUR OPTIQUE

(30) Priority: 18.03.2016 JP 2016055213
(43) Date of publication of application: 20.09.2017
(73) Proprietor: Mitsubishi Pencil Company, Limited, Tokyo 140-8537 (JP)
(72) Inventor: MITSUI, Akihito, Yokohama-shi, Kanagawa 221-8550 (JP); BACH, Thiago, Yokohama-shi, Kanagawa 221-8550 (JP)
(74) Representative: Vossius & Partner Patentanwälte Rechtsanwälte mbB

(56) References cited:
- EP-A1- 2 902 824
- DE-B3-102012 212 254
- JP-A- 2001 215 362
- US-A- 6 102 582
- US-A1- 2016 077 287
- US-B1- 8 757 893

## Description

### BACKGROUND OF THE INVENTION

### 1. Field of the invention

The present invention relates to an optical connector provided with an optical coupling member used in the case of condensing light from a light emitting device to input to an optical fiber, and condensing light output from an optical fiber to a light receiving device.

### 2. Description of the Related Art

An optical coupling member is used in propagating light output from a light source inside an optical fiber and when necessary, outputting to the air, or inputting light propagating in the air into an optical fiber. As one aspect of such an optical coupling member, for example, proposed is an optical connector provided with a socket installed with an optical lens and a cylindrical magnet in a socket body to fit an end portion of an optical fiber, and a plug installed with a cylindrical magnet in a plug body to fit an end portion of an optical fiber (for example, see Japanese Unexamined Utility Model Publication S61-70817). According to the optical connector, the end face of the optical fiber and the spherical surface of the optical lens are always brought into contact with each other, the socket and plug are coupled by forces of the magnets, and it is thereby possible to ensure high transmission efficiency even when the end face of the optical fiber is not a complete plane.

However, in the above-mentioned conventional optical connector, the magnet installed in the socket is disposed inside a hole formed on the plug side, and the magnet installed in the plug is disposed around the periphery of an insertion shaft provided on the socket side. Then, in coupling the plug into the socket, it is necessary to perform work of inserting the magnet on the plug side into a cylindrical wall portion that regulates the hole formed in the socket, and inserting the insertion shaft protruding to the socket side from the magnet into the inside of the magnet on the socket side. Therefore, the work of inserting the plug into the socket is required, and there is the problem that work of coupling the optical connector is complicated.

US 2016/0077287 A1 discloses optical plugs and optical connectors for making optical connections. The optical plugs and optical connectors have a nosepiece that is easily removed and replaced for allowing access to an optical interface for cleaning. The nosepiece may also protect the optical interface when installed.

US 8 757 893 B1 discloses an optical connector subassembly that includes a connector body, an optical coupling assembly within the connector body, first and second alignment pins, and a pin switch coupled to the first and second alignment pins.

US 6 102 582 A discloses a device for controlling alignment between two optical devices that comprises a mobile magnet attached to a mobile optical device and a plurality of programmable magnets for moving the mobile magnet and attached optical device in relation to a second optical device.

DE 10 2012 212 254 B3 discloses a signal transmission connector that includes a permanent magnet assembly.

### SUMMARY OF THE INVENTION

The present invention was made in view of such a problem, and it is an object of the invention to provide an optical connector capable of improving coupling accuracy and further improving propagation efficiency of light inside an optical fiber, without needing complicated coupling work.

According to the invention, an optical connector as recited in independent claim 1 is provided. The dependent claims define embodiments. The optical connector of the present invention has an optical coupling member provided with a hold member where a storage portion to store a lens is formed at one end, and an insertion hole to insert an optical fiber is formed at the other end, and a first member which is provided outside in a direction crossing a storage direction of the lens at one end of the hold member, and generates a force to align the center of the lens with the center of an optical element provided in a coupling target, a shift regulation member which regulates a shift of the optical coupling member, while permitting alignment operation of the optical coupling member with the coupling target, and a case in which is formed storage space with an opening on the coupling target side for storing the optical coupling member and the shift regulation member, and which is provided with a second member for generating a force to an end face on the coupling target side positioned outside the optical element, on an end face opposed to the coupling target outside the opening crossing the storage direction.

### BRIEF DESCRIPTION OF THE DRAWINGS

FIG. 1 is a perspective view of an optical connector according to this Embodiment;
FIG. 2 is an exploded perspective view of decomposed components inside the optical connector shown in FIG. 1;
FIG. 3 is an explanatory view of an optical coupling member according to this Embodiment, and is a partial cross-sectional view along the arrow A-A shown in FIG. 2;
FIG. 4 is an enlarged view inside the alternate long and two short dashes line B shown in FIG. 3;
FIG. 5 is a cross-sectional view along the arrow C-C of a guide member, optical coupling member and cover member in a state where the cover member is attached to the guide member with the optical coupling member disposed shown in FIG. 2;
FIG. 6A is a side elevational view of the optical connector according to this Embodiment;
FIG. 6B is a cross-sectional view along the arrow D-D shown in FIG. 6A;
FIG. 7A is a plan view illustrating a state where a pair of optical connectors according to this Embodiment are opposed to each other at a distance;
FIG. 7B is a cross-sectional view of the pair of optical connectors shown in FIG. 7A;
FIG. 8 A is a plan view illustrating a state where the pair of optical connectors according to this Embodiment get nearer than in FIG. 7A and optical coupling members are coupled;
FIG. 8B is a cross-sectional view of the pair of optical connectors shown in FIG. 8A;
FIG. 9A is a plan view illustrating a state where the pair of optical connectors according to this Embodiment are connected;
FIG. 9B is a cross-sectional view of the pair of optical connectors shown in FIG. 9A;
FIG. 10 is a perspective view illustrating the state where the pair of optical connectors according to this Embodiment are connected;
FIG. 11A is an explanatory view of work of coupling optical coupling members according to this Embodiment;
FIG. 11B is another explanatory view of work of coupling optical coupling members according to this Embodiment;
FIG. 11C is still another explanatory view of work of coupling optical coupling members according to this Embodiment;
FIG. 12 is an explanatory view to explain a magnetic pole of each magnet provided in a pair of optical connectors;
FIG. 13 is an explanatory view of an optical connector according to a modification of this Embodiment;
FIG. 14 is an explanatory view of an optical coupling member according to a modification of this Embodiment; and
FIG. 15 is another explanatory view of an optical connector according to a modification of this Embodiment.

### DETAILED DESCRIPTION OF THE INVENTION

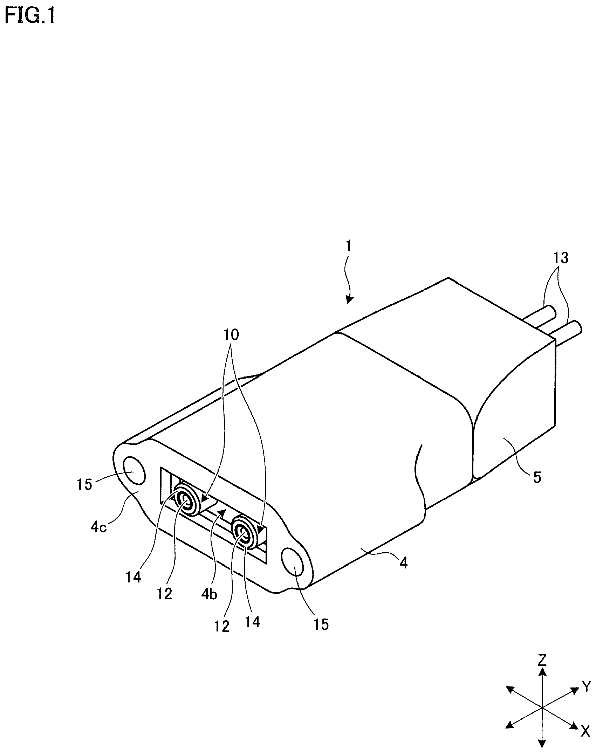

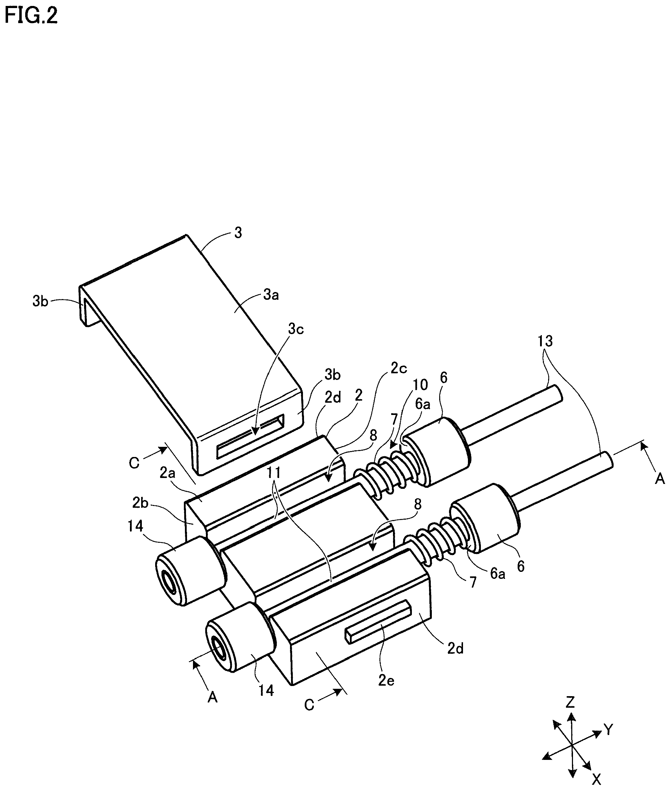

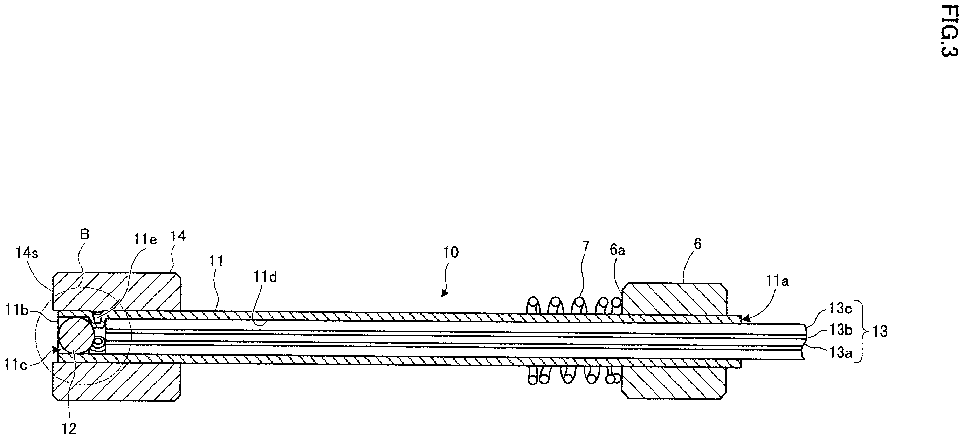

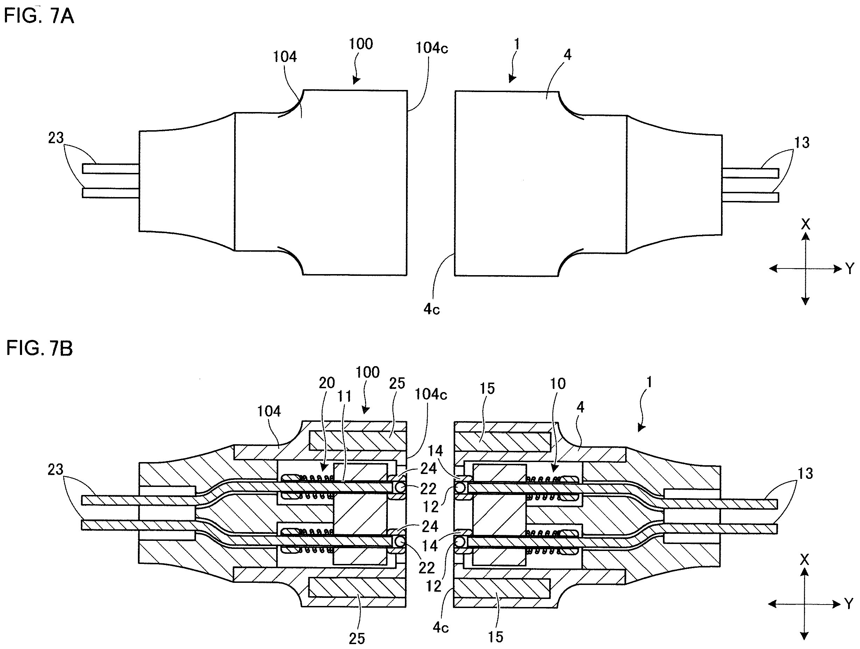

An Embodiment of the present invention will specifically be described below with reference to accompanying drawings. FIG. 1 is a perspective view of an optical connector according to this Embodiment. FIG. 2 is an exploded perspective view of decomposed components inside the optical connector shown in FIG. 1. For convenience in description, it is assumed that with respect to an optical connector 1, a connection side to an optical connector 100 (see FIGs. 7A and 7B, etc.) on the partner side (coupling target side) is referred to as a front side (one end side), and that the side opposite to the connection side is referred to as a rear side (the other end side) . In FIGs. 1, 2, 4, 6A and 6B, the left side in the plane of paper is the front side, and the right side in the plane of paper is the rear side. Further, in FIG. 3, the lower side in the plane of paper is the front side, and the upper side in the plane of paper is the rear side. Furthermore, on the drawings, the X direction and Y direction refer to two directions orthogonal in the horizontal surface, the X direction is a direction in which a plurality of optical coupling members disposed in the optical connector is arranged, and the Y direction is an extension direction of the optical coupling member. Further, the Z direction refers to a height direction orthogonal to the X direction and the Y direction. The relationship among the X direction, Y direction and Z direction is the same as in the other drawings.

The optical connector 1 shown in FIG. 1 has optical coupling members 10, a guide member 2 that is an example of a shift regulation member, and a cover member 3, shown in FIG. 2, inside a case 4 to be comprised thereof. First, the optical coupling member 10 will be described.

### <Optical coupling member>

FIG. 3 is an explanatory view of the optical coupling member according to this Embodiment, and is a partial cross-sectional view along the arrow A-A shown in FIG. 2. As shown in FIG. 3, the optical coupling member 10 according to this Embodiment includes a holder 11 as a hold member having a substantially cylindrical shape, a ball lens 12 held in one end portion of the holder 11, and a first magnet 14 as a first member provided on the outer periphery at one end portion of the holder 11 to be comprised thereof. For example, in the optical coupling member 10 according to this Embodiment, as the optical fiber 13, a plastic optical fiber is suitably inserted. In addition, the optical fiber held by the optical coupling member according to the present invention is not limited thereto, and may be comprised of a glass fiber.

For example, the holder 11 is formed of a metal material such as stainless. Particularly, from the viewpoint of processability, it is preferable that the holder 11 is formed of austenitic stainless. As shown in FIG. 3, an insertion hole 11a to insert the optical fiber 13 is provided in a rear end portion in the holder 11. On the other hand, an opening portion 11b is provided in a front end portion (end portion on the ball lens 12 side) in the holder 11. A storage portion 11c to store the ball lens 12 is provided inside the opening portion 11b. The storage portion 11c is provided in dimensions for enabling the entire ball lens 12 to be stored inside the portion so as to prevent damage to the surface of the ball lens 12, and is configured to enable the ball lens 12 to be press-fitted.

A through hole 11d with a diameter slightly larger than an outside diameter dimension of the optical fiber 13 is provided inside the holder 11. The through hole 11d is provided while communicating with the insertion hole 11a, and further communicating with the storage portion 11c. Moreover, in the holder 11 is provided a plurality of depression portions 11e formed by performing pressing processing from the outer periphery portion using a tool and the like. These depression portions 11e are provided between the storage portion 11c and the through hole 11d, and as specifically described later, are used for positioning of the ball lens 12 and optical fiber 13.

For example, the ball lens 12 is formed of a glass material and has a spherical shape. As shown in FIG. 3, the ball lens 12 is stored in the storage portion 11c so that the front end portion thereof is disposed in the same position as that of the front end portion of the holder 11. Further, in a state of being stored inside the storage portion 11c, the ball lens 12 is disposed so as to face the front end portion of the optical fiber 13 inserted into the through hole 11d. In other words, in a state of being positioned on inner wall surfaces formed by providing the depression portions 11e in the holder 11, the ball lens 12 and the optical fiber 13 are positioned in positions having a certain position relationship. At this point, the ball lens 12 is disposed in a state in which the lens is opposed to the front end face of the optical fiber 13. The ball lens 12 is capable of being comprised of a collimate lens for adjusting light incident from the optical fiber 13 to a parallel state.

The optical fiber 13 is comprised of a core 13a provided to penetrate the center thereof, a clad 13b to cover the core 13a, and a reinforcing layer 13c to cover and reinforce the clad 13b. In the end face opposed to the ball lens 12 of the optical fiber 13, the core 13a, clad 13b and reinforcing layer 13c are disposed in the same plane. In other words, the core 13a, clad 13b and reinforcing layer 13c are disposed together in the end face opposed to the ball lens 12. In addition, the configuration of the optical lens 13 is simplified and shown in the other figures.

The optical fiber 13 is inserted into the though hole 11d via the insertion hole 11a, and is fixed in a state in which the front end portion thereof is opposed to the spherical surface of the ball lens 12 in the vicinity thereof. For example, the optical fiber 13 is fixed with an adhesive applied onto the inner face of the holder 11. In addition, the optical fiber 13 may be fixed, by modifying a part of the holder 11.

In the optical coupling member 10 according to this Embodiment, for example, the optical fiber 13 is comprised of a graded index (GI) optical fiber, and is comprised so that the refractive index changes continuously in cross section perpendicular to the fiber shaft. Further, for example, the core 13a and clad 13b are comprised of a perfluorinated optical resin such that F substitutes for H of C-H bond. In this way, by forming the optical fiber 13 with the perfluorinated optical resin, while constituting with the GI optical fiber, it is possible to actualize high-speed and high-capacity communications.

In the optical coupling member 10, in order to perform positioning of the ball lens 12 and optical fiber 13 with ease, while suppressing increases in cost, the depression portions 11e provided in the holder 11 are used. Specifically, positioning is performed by bringing a part of each of the ball lens 12 and optical fiber 13 into contact with contact surfaces (inclined surfaces) formed by providing the depression portions 11e in the holder 11, the need is thereby eliminated for a configuration such as a spacer for positioning, and it is made possible to perform positioning of the ball lens 12 and optical fiber 13 with ease, while suppressing increases in cost.

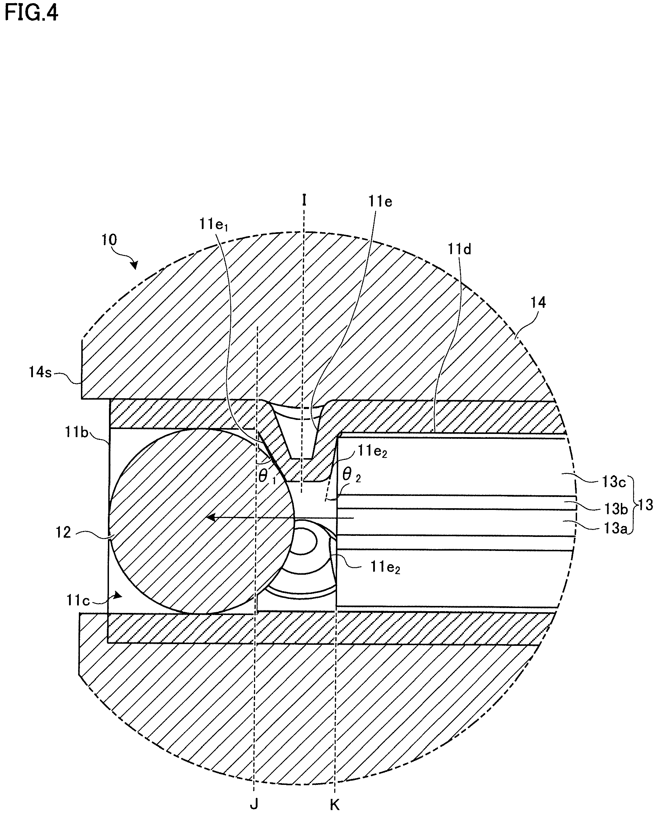

Herein, a method of positioning the ball lens 12 and optical fiber 13 in the holder 11 will be described with reference to FIG. 4. FIG. 4 is an enlarged view inside the alternate long and two short dashes line B shown in FIG. 3. As shown in FIG. 4, on the inclined surfaces formed by providing the depression portion 11e, a part of the ball lens 12 comes into contact with a portion opposed to the ball lens 12, and a part of the clad 13b, reinforcing layer 13c, or the clad 13b and reinforcing layer 13c except the core 13a constituting the optical fiber 13 comes into contact with a portion opposed to the optical fiber 13. In such a contact state, the ball lens 12 and optical fiber 13 are respectively positioned in predetermined positions of the holder 11.

As shown in FIG. 4, in the depression portion 11e, with respect to a plane (for example, plane I that is disposed parallel with the end face of the optical fiber 13 and that passes through the center of the depression portion 11e shown in FIG. 4) orthogonal to an insertion direction of the optical fiber 13, an angle of the portion opposed to the ball lens 12 and an angle of the portion opposed to the optical fiber 13 are provided at different angles. For example, such a depression portion 11e is provided by performing pressing processing using tapered tools with front end portions of different shapes. By performing pressing processing using such tools, with respect to the center axis in the pressing processing as a reference, by making the angle of the portion opposed to the ball lens 12 and the angle of the portion opposed to the optical fiber 13 different angles, the depression portion 11e is allowed to position the ball lens 12 and optical fiber 13 of different shapes to be positioned effectively.

Further, in the holder 11, a plurality of (three, in this Embodiment) such depression portions 11e is provided on the same circumference of the holder 11. For formation of the depression portions 11e on the same circumference, for example, it is considered performing pressing processing at the same time from the outer periphery of the holder 11 using the above-mentioned tools of different front-end shapes. By thus providing a plurality of depression portions 11e on the same circumference, it is possible to bring the ball lens 12 and optical fiber 13 into contact in respective pluralities of positions, and it is thereby possible to perform positioning of the ball lens 12 and optical fiber 13 with higher accuracy.

The portion opposed to the ball lens 12 in the depression portion 11e constitutes an inclined surface 11e₁. The inclined surface 11e₁ is provided so that an angle θ₁ with respect to a plane (for example, plane J that is disposed parallel with the end face of the optical fiber 13 and that passes through a base end portion of the depression portion 11e shown in FIG. 4) orthogonal to the insertion direction of the optical fiber 13 shown by the arrow in FIG. 4 ranges from 0° to 45°. By thus setting the angle θ₁ of the inclined surface 11ₑ₁ on the ball lens 12 side in the range of 0° to 45° with respect to the plane J orthogonal to the insertion direction of the optical fiber 13, since it is possible to perform positioning in a state in which a part of the ball lens 12 on the optical fiber 13 side is supported, it is possible to enhance position accuracy of the ball lens 12.

On the other hand, the portion opposed to the optical fiber 13 in the depression portion 11e constitutes an inclined surface 11e₂. The inclined surface 11e₂ is provided so that an angle θ₂ with respect to a plane (for example, plane K disposed parallel with the end face of the optical fiber 13 shown in FIG. 4) orthogonal to the insertion direction of the optical fiber 13 is set at 20° or less. By thus setting the angle of the inclined surface 11e₂ at 20° or less with respect to the plane K, as described above, when the optical fiber 13 is comprised of an optical fiber that the core 13a, clad 13b and reinforcing layer 13c are disposed in the same plane, by bringing the end face of the optical fiber 13 into contact with the depression portion 11e, it is possible to make it easy ensuring position accuracy thereof.

In this way, in the optical coupling member 10, since positioning is performed by bringing a part of the ball lens 12 and a part of the optical fiber 13 into contact with the depression portion 11e provided in the holder 11, it is possible to perform positioning of the ball lens 12 and optical fiber 13 with the depression portion 11e as a reference. Therefore, as compared with the case of inserting different parts into the holder 11, it is possible to improve work efficiency, and while suppressing increases in cost, it is possible to perform positioning of the ball lens 12 and optical fiber 13 with ease.

The first magnet 14 is provided on the outer periphery of the front end portion (end portion on the ball lens 12 side) in the holder 11. For example, the first magnet 14 has a substantially cylindrical shape. The first magnet 14 is fixed to the holder 11 in a state in which a part of the holder 11 is stored therein. For example, the first magnet 14 is fixed by an adhesive applied onto the outer periphery face of the holder 11 or press fitting. In addition, the first magnet 14 may be fixed to the outer periphery face by welding or the like.

As shown in FIGs. 3 and 4, in the first magnet 14, a front end face 14s of the magnet has the shape of a plane. The front end face 14s of the first magnet 14 is fixed to the holder 11 to be disposed in a position at the slightly front of the front end portion of the holder 11. As described above, the front end portion of the ball lens 12 stored in the storage portion 11c is disposed in the same position as the front end portion of the holder 11. Accordingly, the front end face 14s of the first magnet 14 is disposed at the slightly front of the position of the front end portion of the ball lens 12.

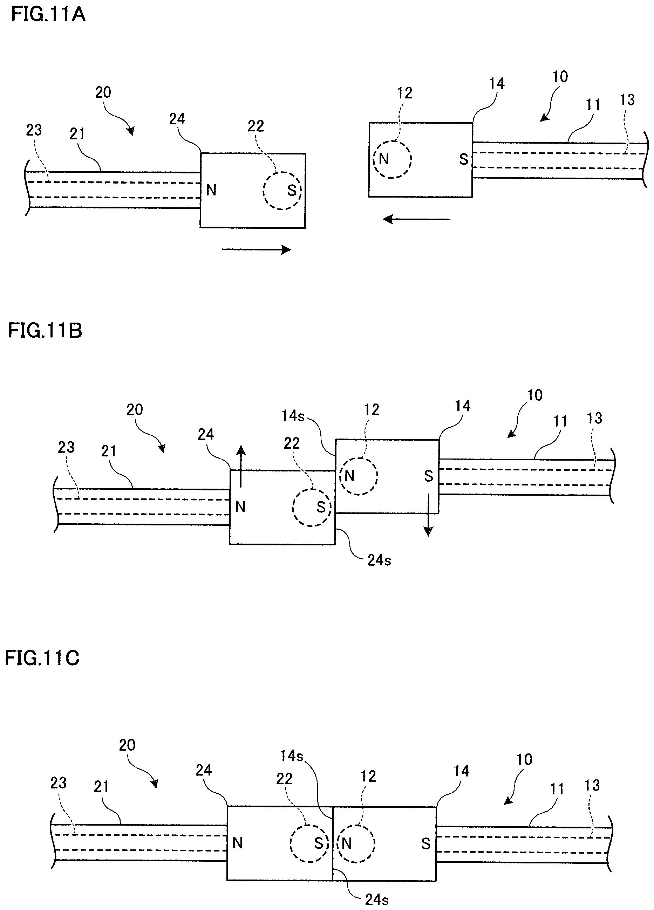

Further, as described specifically later, the first magnet 14 mutually attaches to a first magnet 24 of an optical coupling member 20 on the coupling target side, and plays a role in aligning the center of the ball lens 12 with the center of a ball lens 22 of the optical coupling member 20 (see FIGs. 11A to 11C).

As shown in FIG. 3, near the insertion hole 11a of the holder 11 i.e. on the rear end side of the holder 11, a stopper member 6 is provided. The stopper member 6 has a function of preventing the optical coupling member 10 from protruding to the front more than necessary. For example, the stopper member 6 is fixed to the outer periphery face of the holder 11 with an adhesive. As shown in FIGs. 2 and 3, the stopper member 6 is formed in a cylindrical shape (ring shape) provided with a through hole, and a portion of the holder 11 of the optical coupling member 10 is inserted into the through hole of the stopper member 6. In addition, in this Embodiment, the shape of the stopper member 6 is not limited. The stopper member 6 may be provided partially on the outer periphery face of the holder 11, or a plurality of stopper members 6 may be provided intermittently on the outer periphery face of the holder 11. Materials of the stopper member 6 are formed of resin, metal and the like, and the materials are not particularly limited.

As shown in FIGs. 2 and 3, a coil spring 7 as a biasing member is provided on a front end face 6a of the stopper member 6. The coil spring 7 is comprised of an extension coil spring. As shown in FIG. 2, the coil spring 7 is connected to a rear end face 2c of a guide member 2 described next. In other words, the coil spring 7 connects between the rear end face 2c of the guide member 2 and the front end face 6a of the stopper member 6 attached to the optical coupling member 10, on the rear end side of the guide member 2.

### <Guide member>

The guide member 2 as the shift regulation member will be described next. Although not limited, for example, the guide member 2 is in a block shape formed of an electrical insulating material such as a resin. Then, in a top face 2a of the guide member 2 are formed concave guide grooves 8, 8 with bottoms extending linearly from the front end face (one end face) 2b to the rear end face (the other end face) 2c. Then, the holder 11 of each optical coupling member 10 is disposed in each of the guide grooves 8, 8 individually. In addition, as shown in FIG. 2, the portion of the holder 11 of each optical coupling member 10 is disposed inside each guide groove 8, and the portion of the first magnet 14 protrudes to the front of the front end face 2b of the guide member 2.

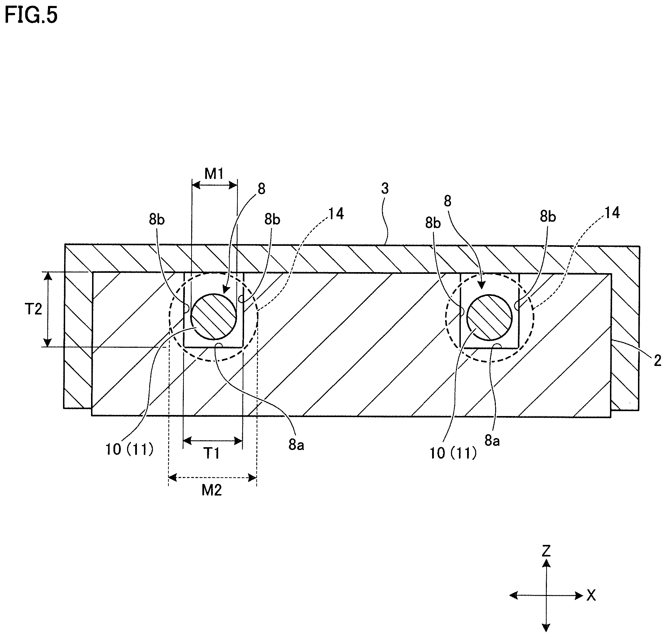

FIG. 5 is a longitudinal cross-sectional view along the arrow C-C of the guide member, optical coupling member and cover member in a state in which the cover member is attached to the guide member with the optical coupling member disposed shown in FIG. 2. As shown in FIG. 5, each guide groove 8 is provided with a bottom 8a, and wall surfaces 8b positioned on opposite sides of the bottom 8a in the X direction. As shown in FIG. 5, a width dimension of the guide groove 8 i.e. a distance between the wall surfaces 8b, 8b on opposite sides (distance in the X direction) is T1. The width dimension T1 is formed to be larger than the optical coupling member 10 (in FIG. 5, diameter M1 of a portion positioned as an outer periphery surface of the holder 11) disposed inside the guide groove 8. Accordingly, a clearance (gap) is generated obtained by T1-M1 in the X direction between the guide groove 8 and the optical coupling member 10. On the other hand, the width dimension T1 of the guide groove 8 is smaller than a width dimension (in FIG. 5, the first magnet 14 is shown by dotted lines. In addition, a width dimension of the optical coupling member 10 in a portion where the first magnet 14 is positioned as the outer periphery surface is shown by diameter M2) M2 of the optical coupling member 10 of a portion where the first magnet 14 is disposed. Accordingly, the portion of the first magnet 14 does not enter into the guide groove 8, and is held in a state of protruding to the front end face 2b of the guide member 2.

Further, as shown in FIG. 5, a height dimension of each guide groove 8 i.e. a height dimension in the Z direction of the wall surface 8b is T2. The height dimension T2 is formed to be larger than the diameter M1 of the optical coupling member 10 disposed inside the guide groove 8. As shown in FIG. 5, the upper portion of the guide groove 8 is blocked with the cover member 3, and therefore, a clearance (gap) in the vertical direction (Z direction) of the optical coupling member 10 disposed inside the guide groove 8 is made T2-M1. Further, the height dimension T2 of the guide groove 8 is smaller than the diameter M2 of the optical coupling member 10 of the portion provided with the first magnet 14. In addition, the dimension relationship is adequate that the width dimension T1 and height dimension T2 of the guide groove 8 are smaller than at least one of the width dimension and the height dimension of the optical coupling member 10 provided with the first magnet 14.

As described above, on the rear end side of the guide member 2, the coil spring 7 is connected between the front end face 6a of the stopper member 6 of the optical coupling member 10 and the rear end face 2c of the guide member 2 (see FIG. 2). The coil spring 7 is an extension coil spring, and provides a biasing force that acts to bias the first magnet 14 to the front end face 2b side of the guide member 2. Therefore, as shown in FIG. 2, the optical coupling member 10 disposed inside each guide groove 8 is acted upon by the biasing force in the rear end direction of the guide member 2, and is held in a state in which the rear end face of each first magnet 14 is brought into contact with the front end face 2b of the guide member 2.

As shown in FIG. 2, on side surfaces 2d on opposite sides of the guide member 2, for example, protrusions 2e in an elongated shape are formed in the Y direction. In addition, in FIG. 2, the protrusion 2e is shown on only one side surface 2d viewed on the figure.

As shown in FIG. 2, the cover member 3 has a plate-shaped ceiling portion 3a, and outer wall portions 3b, 3b bent downward perpendicularly on opposite sides in the X direction of the ceiling portion 3a. The cover member 3 is formed of a resin, non-magnetic metal or the like. For example, when the cover member 3 is formed of a resin, it is possible to form the cover member 3 comprised of the ceiling portion 3a and outer wall portions 3b by injection molding or the like. Alternatively, when the cover member 3 is formed of a non-magnetic metal material, it is possible to construct the ceiling portion 3a and outer wall portions 3b by bending the metal plate. As shown in FIG. 2, on the outer wall portions 3b provided on opposite sides in the X direction of the cover member 3, long holes 3c in an elongated shape are formed in the Y direction. In addition, in FIG. 2, the long hole 3c is shown on only one outer wall portion 3b viewed on the figure. The size of the long hole 3c is made substantially the same as the size of the protrusion 2e provided in the guide member 2. Then, in an assembly step of the optical connector 1, by mounting the cover member 3 from above the guide member 2, the protrusion 2e of the guide member 2 enters into the long hole 3c of the cover member 3, and the cover member 3 is fixed to the guide member 2.

### <Case>

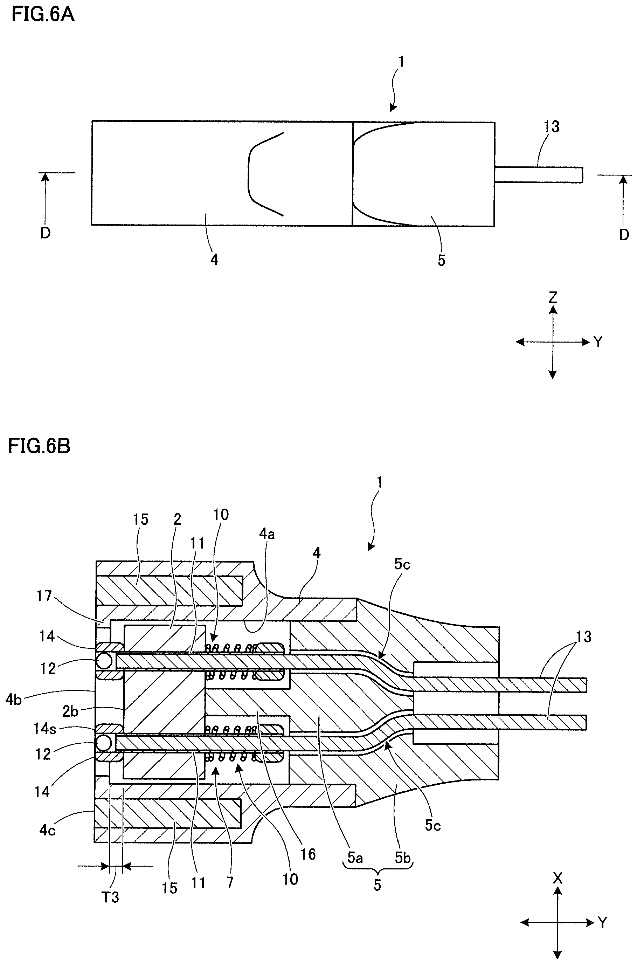

The case 4 will be described next. FIG. 6A is a side elevational view of the optical connector according to this Embodiment, and FIG. 6B is a cross-sectional view along the arrow D-D shown in FIG. 6A

The case 4 is formed of metal, resin or the like. As shown in FIG. 6B, the case 4 is provided with storage space 4a penetrating from the front end side to the rear end side on the side opposed to the coupling target. Then, the guide member 2, cover member 3 and optical coupling member 10 shown in FIG. 2 are stored inside the storage space 4a. In addition, the cover member 3 is not indicated in the figure shown by FIG. 6B.

As shown in FIGs. 1 and 6B, the front end side of the storage space 4a makes an opening (hereinafter, referred to as opening 4b), and from the opening 4a, the ball lens 12 and ring-shaped first magnet 14 of the optical coupling member 10 are viewed. In addition, as shown in FIGs. 1 and 6B, centers of ball lenses 12 of two optical coupling members 10 respectively are in a state in which the centers are aligned in the straight line in the X direction, and states in which the ball lenses 12 are slightly displaced in the vertical direction (Z direction) are also permitted. As described specifically later, the optical coupling member 10 in this Embodiment is supported by floating structure, and positioning operation in the X direction, Y direction and Z direction between the optical coupling member 10 and the coupling target is permitted by the guide member 2. Accordingly, even when the center position of the ball lens 12 is slightly displaced in the vertical direction from the X direction, it is possible to suitably align with the coupling target by floating operation of the optical coupling member 10.

As shown in FIGs. 1 and 6B, on the front end face 4c of the case 4 facing the coupling target side positioned on the outer periphery of the opening 4b, two second magnets 15 are provided as a second member. The front end face 4c of the case 4 is a face opposed to a front end face 104c (see FIGs. 7A and 7B and the like) of a case 104 of an optical connector 100 that is the coupling target side.

As shown in FIG. 6B, in the storage space 4a of the case 4, the width is slightly narrow on the opening 4b side, and the case 4 is provided with a frame body 17 a part of which is opposed to the guide member 2 at the back on the periphery of the opening 4b. Accordingly, the guide member 2 is regulated by the frame member 17 not to get to the outside. Further, the storage space 4a is provided with a distance T3 that permits a shift of the guide member 2 in the back-and-forth direction (Y direction). In addition, a slight clearance is provided between the guide member 2 and the inner wall of the case 4. In this way, the guide member 2 is allowed to shift within a predetermined range in the storage space 4a.

The second magnet 15 is disposed inside a concave portion provided in the front end face 4c of the case 4. An outer surface of the second magnet 15 is formed in the substantially same plane as the front end face 4c of the case 4.

In the Embodiment shown in FIG. 1, one second magnet 15 is disposed to the right or left of the opening 4b on each of opposite sides, but the number and arrangement of second magnets 15 are not particularly limited. In addition, it is suitable that a plurality of second magnets 15 is provided from the viewpoint of improving alignment accuracy. Further, as shown in FIG. 1, when one second magnet 15 is disposed to the right or left of the opening 4b on each of opposite sides, it is preferable that the first magnet 14 disposed in the optical coupling member 10 and the second magnet 15 are arranged in the same straight line. By thus arranging in the straight line, in a state of being connected to the coupling target, the force acts equally to the right and left, and it is possible to obtain a stable connection state. In addition, for the second magnet 15, it is possible to make an arrangement for enabling inverse attachment to the coupling target to be prevented, and the specific configuration will be described later.

In FIG. 1, the shape of the second magnet 15 is circular, but the shape is not limited. For example, the second magnet 15 may be in the shape of a polygon, shape of a ring, shape of an ellipse, shape of a sector and the like.

### <Cap>

As shown in FIGs. 1 and 6B, the rear end side of the case 4 is blocked with a cap 5. The cap 5 is formed of metal, resin or the like. As shown in FIG. 6B, the cap 5 has a front portion 5a with the substantially same width dimension as that of the storage space 4a of the case 4, and a rear portion 5b provided at the rear end of the front portion 5a with a level difference
provided to be comprised thereof. The front portion 5a is press-fitted, screwed, or bonded into the storage space 4a of the case 4, or the like. As shown in FIG. 6B, the front portion 5a is provided with a protrusion portion 16 that protrudes to the front direction. The protrusion portion 16 is struck by the guide member 2 inside the storage space 4a. Further, as described already above, the first magnet 14 is biased to the front end face 2b side of the guide member 2 by the coil spring 7. Therefore, the guide member 2 is acted upon by the biasing force at the rear (direction of the rear portion 5b of the cap 5) in a state of being struck by the protrusion portion 16, and holds a stable posture. Further, as shown in FIG. 6B, inside the cap 5 are provided insertion openings 5c penetrating from the front portion 5a to the rear portion 5b to pass the optical fiber 13. As shown in FIG. 6B, the optical fiber 13 is inserted in an insertion opening 13a, and extends to the rear of the cap 5.

In addition, in this Embodiment, the case 4 to store the optical coupling member 10 and the guide member 2 and the cap 5 to block the rear of the case 4 are configured separately, and may be integrated.

### <Connection with the coupling target>

Next, connection with the coupling target will be described. FIG. 7A is a plan view illustrating a state where a pair of optical connectors according to this Embodiment are opposed to each other at a distance, and FIG. 7B is a cross-sectional view of the pair of optical connectors shown in FIG. 7A. In addition, the cross-section view shown in FIG. 7B illustrates the cross-sectional view taken in the same position as in FIG. 6B.

Herein, the optical connector 1 on the right side in the plane of paper shown in FIGs. 7A and 7B is the optical connector 1 described in FIGs. 1 to 6A and 6B. On the other hand, the optical connector on the left side in the plane of paper shown in FIGs. 7A and 7B is the optical connector 100 as a coupling target with respect the optical connector 1. In this Embodiment, the description will be given while assuming that internal structures of the optical connector 1 and optical connector 100 as the coupling target are the same. In addition, the internal structures may be different between the optical connectors 1 and 100. In addition, for convenience for description, in the optical connector 100 as the coupling target, used are an optical coupling member 20, holder 21, ball lens 22, optical fiber 23, first magnet 24, case 104, and second magnet 25, and reference numerals are thus different from those of the optical connector 1 to explain.

In the first magnet 14 provided in the optical connector 1 and the first magnet 24 provided in the optical connector 100 shown in FIG. 7B, one of the magnets is magnetized to the N pole, and the other one is magnetized to the S pole so that the magnets align to each other in approaching. Similarly, in the second magnet 15 provided in the optical connector 1 and the second magnet 25 provided in the optical connector 100, one of the magnets is magnetized to the N pole, and the other one is magnetized to the S pole so that the magnets align to each other in approaching.

As shown in FIGs. 7A and 7B, front end faces 4c, 104c of the cases 4, 104 of the optical connectors 1, 100 face each other, respectively, but are spaced a predetermined distance or more, and a force is not generated yet between the optical connectors 1 and 100.

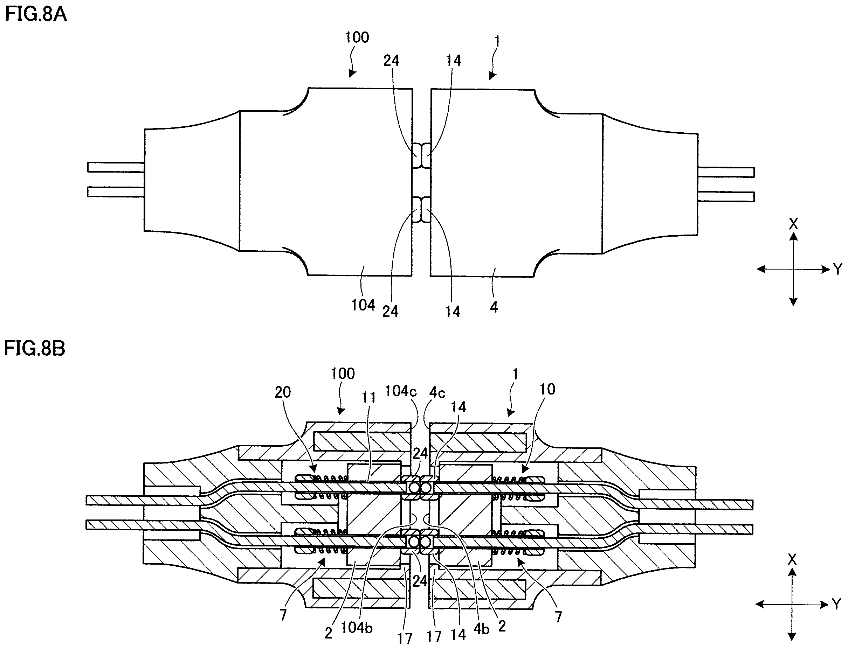

FIG. 8 A is a plan view illustrating a state where a pair of optical connectors according to this Embodiment get nearer than in FIG. 7A and optical coupling members are coupled, and FIG. 8B is a cross-sectional view of the pair of optical connectors shown in FIG. 8A.

As shown in FIGs. 8A and 8B, when the optical connectors 1, 100 get nearer each other than in FIGs. 7A and 7B, a magnetic force is generated between the first magnet 14 of the optical coupling member 10 provided in the optical connector 1 and the first magnet 24 of the optical coupling member 20 provided in the optical connector 100. The magnetic force at this point overcomes the biasing force of the coil spring 7 provided in each of the optical coupling members 10, 20. Therefore, the optical coupling members 10, 20 and guide members 2 move forward to get nearer one another. At this point, the first magnets 14, 24 protrude forward from the openings 4b, 104b of the cases 4, 104, respectively, and then, contact each other. In addition, since shifts to the front of the guide members 2 are regulated by the frame bodies3 17 on the opening 4b, 104b sides of the cases 4, 104, respectively, only when the optical connectors 1, 100 move close by a predetermined distance or more, the first magnets 14, 24 approach and attach to each other.

In this Embodiment, the biasing force of the coil spring 7 is set to be weaker than the magnetic force acting upon between the first magnets 14, 24. By this means, the first magnets 14, 24 of the optical coupling members 10, 20 enable the optical coupling members 10, 20 to shift forward from initial positions shown in FIGs. 7A and 7B by the magnetic force of the first magnets 14, 24, and it is possible to suitably couple the optical coupling members 10, 20 to each other.

Described below is work of coupling the optical coupling members 10, 20 to each other in connecting the optical connectors 1, 100. FIGs. 11A to 11C are explanatory views of the work of coupling the optical coupling members 10, 20 according to this Embodiment. In FIGs. 11A to 11C, a part of each of the optical fibers 13, 23 is shown by dotted lines. As shown in FIGs. 11A to 11C, the optical coupling member 20 differs from the optical coupling member 10 only in the magnetized form of the first magnet 24. For example, in the first magnet 14 of the optical coupling member 10, the vicinity of the front end portion on the ball lens 12 side is magnetized to the N pole, and the vicinity of the end portion on the opposite side is magnetized to the S pole. On the other hand, in the first magnet 24 of the optical coupling member 20, as distinct from the first magnet 14 of the optical coupling member 10, the vicinity of the front end portion on the ball lens 22 side is magnetized to the S pole, and the vicinity of the end portion on the opposite side is magnetized to the N pole.

As shown in FIG. 11A, when the first magnets 14, 24 move close to a certain distance from the initial positions shown in FIG. 7B, by the magnetic force acting between the first magnets 14, 24, the first magnets 14, 24 attract each other from the initial positions, and mutually shift forward. Then, the first magnets 14, 24 are in a contact state (see FIG. 11B).

Then, from the contact state shown in FIG. 11B, by the magnetic force of the first magnets 14, 24, the first magnets 14, 24 further shift so that the front end face 24s on the optical coupling member 10 side of the first magnet 24 and the front end face 14s on the optical coupling member 20 side of the first magnet 14 are disposed opposite each other. Herein, the first magnet 14 shifts downward, and the second magnet 24 shifts upward. By this means, as shown in FIG. 11C, the front end face 24s on the optical coupling member 10 side of the first magnet 24 and the front end face 14s on the optical coupling member 20 side of the first magnet 14 are in a state of being brought into intimate contact with each other.

In this way, by the state in which the front end faces 14s, 24s of the first magnets 14, 24 are brought into intimate contact with each other, respectively, the centers of the ball lenses 12, 22 coincide each other. In addition, when plating is applied to at least one of the front end faces 14s, 24s of the first magnets 14, 24, respectively, sliding is improved, and it is possible to shift while sliding the surface of each of the first magnets 14, 24. Accordingly, it is possible to perform alignment with higher accuracy. Further, in this Embodiment, both the optical coupling members 10, 20 are allowed to perform alignment operation, and for example, when the coupling target is fixed and does not move, only the optical coupling member 10 shifts as shown in FIGs. 11A and 11B, and is coupled to the coupling target.

In addition, in this Embodiment, pluralities of optical coupling members 10, 20 are respectively disposed in each of the optical connectors 1, 100. Accordingly, there is a plurality of pairs of optical coupling members 10, 20 to connect. Although being dependent on uses, it is possible to make coupling timing of pairs substantially the same timing, or it is also possible to change coupling timing. For example, coupling timing of pairs in the optical connectors 1, 100 as described above is defined to be substantially the same timing. "Substantially the same timing" is a concept that is not strictly the same timing and that includes manufacturing errors and the like.

In the coupling work described in FIGs. 11A to 11C, in this Embodiment, by using the shift regulation member, it is regulated that the optical coupling member 10 is allowed to perform alignment operation with the optical coupling member 20 as the coupling target, while being prevented from shifting more than the alignment operation. Shift regulation with respect to the optical coupling member 10 will be described below. In addition, although the description is omitted, the optical coupling member 20 is also the same. The optical coupling member 10 in this Embodiment is supported by a floating structure. In other words, the optical coupling member 10 is supported to be able to shift in any of three axis directions including the side-to-side direction (X direction), back-and-forth direction (Y direction) and up-and-down direction (Z direction). However, when the optical coupling member 10 is allowed to shift freely in the three axis directions and is not regulated in shift, for example, as a plurality of optical coupling members 10 are provided in parallel, by repulsive force and attractive force generated between respective optical coupling members, the initial position of each of the optical coupling members 10 is not stabilized. Further, also in the case of arranging a single optical coupling member 10, positioning accuracy tends to degrade in installing the optical coupling member 10 inside the optical connector 1, and further, in the case where a strong impact or the like is applied to the optical connector 1, there is the risk of causing damage to the ball lens 12 and the like, by the optical coupling member 10 colliding with the case portion violently and the like. When the initial position of the optical coupling member 10 is thus not stabilized, coupling to the coupling target is not performed with high alignment accuracy, or there is the risk that it is not possible to perform coupling to the coupling target. Accordingly, in this Embodiment, the shift regulation member is provided which regulates the shift of the optical coupling member 10, while allowing the optical coupling member 10 to perform alignment operation with the coupling target.

Specifically, in this Embodiment, the guide member 2 is used as the shift regulation member. In the guide member 2, the guide groove 8 is formed from the front end to the rear end, and in the optical coupling member 10, in a state in which the first magnet 14 protrudes from the front end side of the guide member 2, the holder 11 is disposed in the guide groove 8. Then, as shown in FIG. 5, the width dimension T1 and height dimension T2 of the guide groove 8 are larger than the diameter (width dimension) M1 of the optical coupling member 10 of the portion disposed in the guide groove 8. By this means, when the optical connectors 1, 100 approach a predetermined distance, the magnetic force is generated between the first magnets 14, 24, and the optical coupling members 10, 20 are capable of suitably shifting in directions for coupling to the partner side, respectively. Further, since the width dimension T1 and height dimension T2 of the guide groove 8 are larger than the diameter of each of the optical coupling members 10, 20 of the portions disposed in the guide groove 8, the clearance is generated between the holder 11 and the guide groove 8. Accordingly, the optical coupling members 10, 20 are capable of suitably shifting in the clearance range formed in the side-to-side direction (X direction) and height direction (Z direction) in the direction crossing the extension direction (back-and-forth direction; (Y direction)) of the guide groove 8. Accordingly, each of the optical coupling members 10, 20 is allowed to perform alignment operation with the partner side in three axis directions, and is capable of suitably performing alignment operation for aligning the centers of the ball lenses 12, 22 of the optical coupling members 10, 20, respectively. In addition, the bottom 8a and side walls 8b of the guide groove 8 and a ceiling portion face of the cover member 3 to block the upper face of the guide groove 8 constitute a regulation face for suppressing that each of the optical coupling members 10, 20 shifts more than necessary. Further, since the width dimension T1 and height dimension T2 of the guide groove 8 are smaller than the diameter M2 of the optical coupling members 10, 20 of the portions provided with the first magnets 14, 24, the first magnets 14, 24 do not enter into the guide groove 8 of the guide member 2, and it is possible to regulate that the optical coupling members 10, 20 shift to the rear end direction more than necessary. By this means, it is possible to suitably regulate the shift of each of the optical coupling members 10, 20, while permitting alignment operation with the partner side of each of the optical coupling members 10, 20.

In addition thereto, in this Embodiment, the guide member 2 is also supported by floating structure. In other words, inside the storage space 4a, both the optical coupling member 10 and the guide member 2 are made the floating structure. For example, in the case where the guide member 2 is fixed inside the storage space 4a, the gap between the guide member 2 and the optical coupling member 10 is limited as a movable range of the optical coupling member 10. When a fit tolerance between the optical connectors is larger than the range, it is not possible to suitably couple the optical coupling members to each other, and the optical connectors do properly not function as a connector. Then, by also supporting the guide member 2 by the floating structure, even when a dimension tolerance of the optical connector is large, it is possible to absorb the tolerance by the guide member 2 moving. Then, eventually, the second magnets 15, 25 perform minute alignment, it is thereby possible to absorb large tolerances by two-stage alignment by the first magnets 14, 24, and the second magnets 15, 25, and further, it is possible to achieve precise alignment with ease.

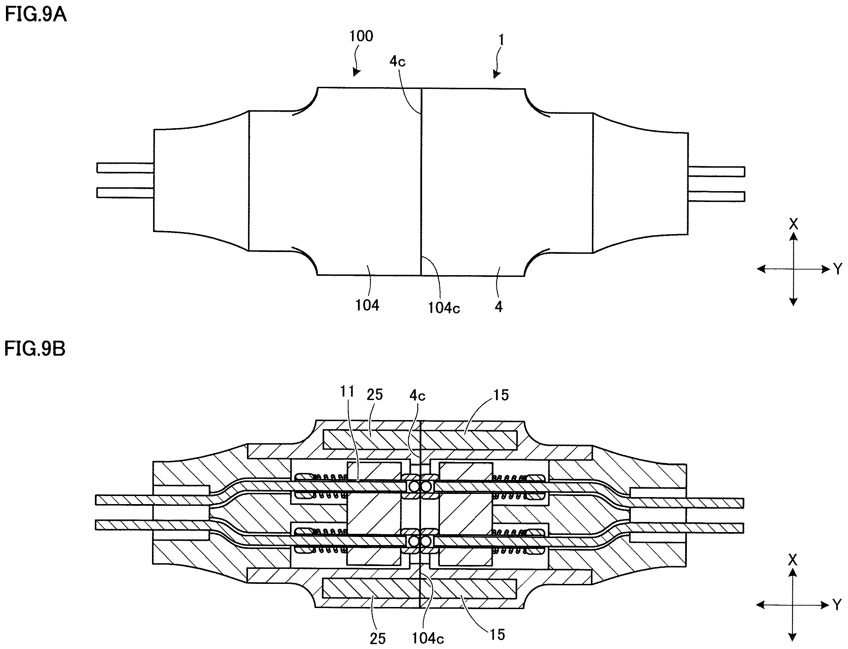

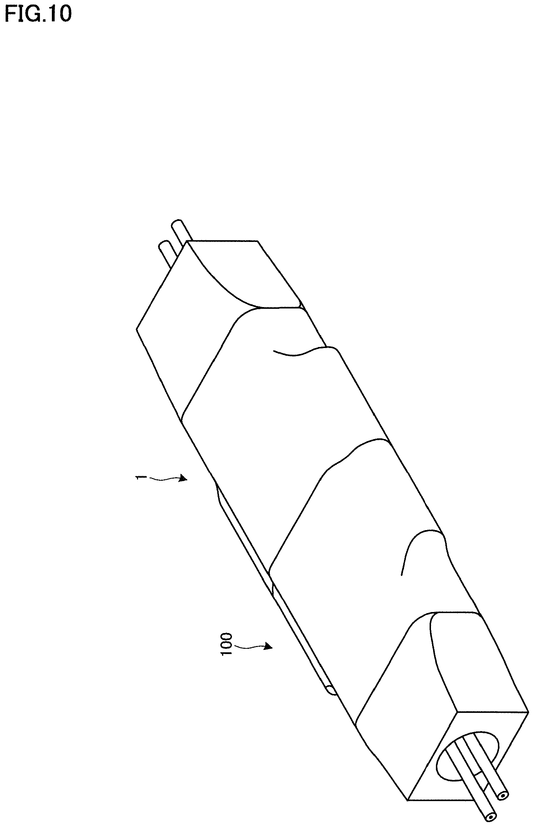

FIG. 9A is a plan view illustrating a state where a pair of optical connectors according to this Embodiment are connected, and FIG. 9B is a cross-sectional view of the pair of optical connectors shown in FIG. 9A. FIG. 10 is a perspective view illustrating the state where the pair of optical connectors according to this Embodiment are connected.

In this Embodiment, it is suitable that the second magnets 15, 25 are connected as shown in FIGs. 9A and 9B after the first magnets 14, 24 of respective optical connectors 1, 100 are first connected as shown in FIGs. 8A and 8B. In a configuration where the second magnets 15, 25 are first connected, and next, the first magnets 14, 24 are connected, or in another configuration where the magnets are concurrently connected, there is a case where misregistration occurs in connecting the first magnets 14, 24. In other words, since shifts of the first magnets 14, 24 are constrained by connection of the second magnets 15, 25, for example, in the case where connection of the second magnets 15, 25 is slightly misaligned, the first magnets 14, 24 are also opposed in a misaligned state. Then, in the state in which the shift is constrained, the first magnets 14, 24 tend to be connected with misregistration generated between the magnets. Accordingly, the configuration where the first magnets 14, 24 are first connected, and subsequently, the second magnets 15, 25 are connected is preferable from the viewpoint of improving alignment accuracy. In this way, by using the second magnets 15, 25 accessorily in aligning the optical connectors 1, 100, it is possible to make alignment accuracy by the second magnets 15, 25 lower than alignment accuracy by the first magnets 14, 24. Accordingly, the first magnets 14, 24 are formed with high accuracy respectively with respect to the lenses 12, 22, and by principally using connection between the first magnets 14, 24, alignment of centers of the lenses is executed. On the other hand, the second magnets 15, 25 are capable of being used accessorily, and may be of rough configuration slightly as compared with the first magnets 14, 24. For example, surface roughness of the second magnets 15, 25 may be larger than that of the first magnets 14, 24, cases 4, 104 may not be brought into intimate contact with each other, and a slight gap may be generated between the front end faces 4c, 104c of the cases 4, 104, respectively.

Further, it is preferable that the magnetic force of the first magnets 14, 24 is stronger than the magnetic force of the second magnets 15, 25. By this means, in alignment with the coupling target, it is possible to use the first magnets 14, 24 principally, while using the second magnets 15, 25 accessorily. Accordingly, it is easy to configure so that the first magnets 14, 24 are first connected, and that the second magnets 15, 25 are next connected.

Furthermore, as described already, such a configuration is preferable that plating is applied to the surfaces of the first magnets 14, 24 to improve sliding, and similarly, it is also possible to apply plating to the surfaces of the second magnets 15, 25 to improve sliding.

### <Inverse attachment preventing function>

An inverse attachment preventing function will be described. Although configurations of the inverse attachment preventing function are not limited, specifically, there is the configuration as described below.

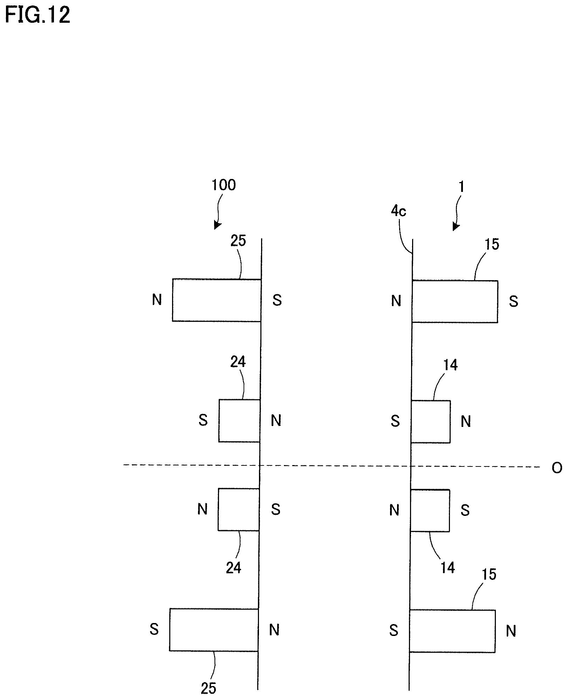

First, according to the invention, there is provided a control by the magnetic pole of each magnet. An example will be shown. As shown in FIG. 12, two first magnets 14 provided at the front end of the optical coupling member 10 of the optical connector 1 are magnetized respectively to different magnetic poles, and two second magnets 15 provided at the end face 4C of the case 4 are magnetized respectively to different magnetic poles. In other words, among a plurality of first magnets 14, one of the first magnets 14 is magnetized to the N pole, and the other first magnet 14 is magnetized to the S pole. Similarly, among a plurality of second magnets 15, one of the second magnets 15 is magnetized to the N pole, and the other second magnet 15 is magnetized to the S pole. In the Embodiment shown in FIG. 12, in the first magnets 14 and second magnets 15 arranged in line, the N pole and the S pole are arranged alternately. On the other hand, in the optical connector 100 as the coupling target, the magnetic poles are configured inversely to those of the optical connector 1.

The state shown in FIG. 12 is a normal attachment direction of the optical connectors 1, 100. In contrast thereto, when the optical connector 1 is attached to the optical connector 100 as the coupling target in a direction of rotating 180 degrees with respect to the direction orthogonal to the front end face 4c of the case 4 as a rotation axis O, this direction is an inverse attachment direction with respect to the coupling target. From the state shown in FIG. 12, when the optical connector 1 is rotated 180 degrees, opposed magnets respectively in the optical connectors 1, 100 have the same magnetic poles, and do not generate the magnetic force (repel one another) . Accordingly, it is not possible to connect the optical connectors 1, 100, and inverse attachment is prevented.

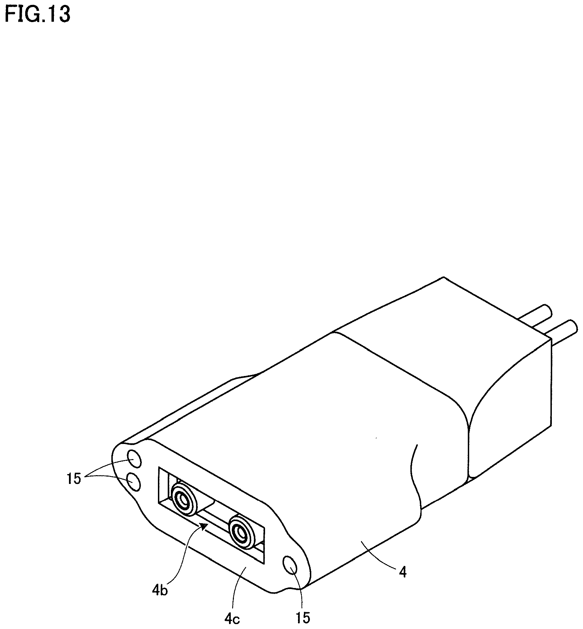

Further, for example, as shown in FIG. 13, one second magnet 15 is disposed in the front end face 4c of the case 4 positioned to the right of the opening 4b in the plane of paper, and two second magnets 15 are disposed in the front end face 4c of the case 4 positioned to the left of the opening 4b in the plane of paper. In this way, for example, by making the arrangement of second magnets 15 different between the right and the left, it is possible to visually add the inverse attachment preventing function.

Alternatively, for example, it is possible to make a configuration that concavo-convex fit-capable connection portions are provided in the case 4 and the case 104 of the coupling target so as to disable connection of the optical cases 4, 104 in attaching inversely.

As described above, in this Embodiment, due to the magnetic forces by the first magnets 14, 24 provided in the optical coupling members 10, 20 and by the second magnets 15, 25 provided in the end faces 4c, 104c of the cases 4, 104, respectively, it is possible to improve alignment accuracy of the optical connectors 1, 100. In addition thereto, by the guide member 2, it is possible to regulate shifts of the optical coupling members 10, 20 more than the alignment operation with the coupling target. By this means, only by bringing the optical connectors 1, 100 close to each other, it is possible to align the centers of the ball lenses 12, 22 with ease. From the foregoing, without needing complicated coupling work, it is possible to improve accuracy of alignment with the coupling target, and it is possible to improve propagation efficiency of light inside the optical fiber.

In the above-mentioned Embodiment, the number of optical coupling members 10 incorporated into the optical connector 1 is two, but any number equal to two or greater than two may be used. The number of optical coupling members 10 may be three or more. In this Embodiment, when a plurality of optical coupling members 10 is provided, it is preferable that the guide groove 8 provided in the guide member 2 is provided individually for each of the optical coupling members 10. In other words, when two optical coupling members 10 exist, two guide grooves 8 are formed, and when four optical coupling members 10 exist, four guide grooves 8 are formed. By this means, by the magnetic forces between the first magnets 14 of a plurality of optical coupling members 10 incorporated into the optical connector 1, it is possible to suppress that the optical coupling members 10 separate from or approach one another by a width of the guide groove 8 or more. Accordingly, it is possible to stably hold the initial positions of a plurality of optical coupling members 10.

Further, in the optical coupling member 10 according to this Embodiment, the center of the ball lens 12 and the center of the ball lens 22 of the optical coupling member 20 are aligned by the force from the first magnet 14. Therefore, it is possible to easily attach and detach with respect to the optical coupling member 20, and it is possible to attach and detach repeatedly for a long time.

Particularly, as shown in FIGs. 9A and 9B, this Embodiment is suitable for the configuration for face-connecting the optical connectors 1, 100 in the front end faces 4c, 104c of the cases 4, 104 using the adsorption force. Therefore, for example, as distinct from a configuration of a connector to insert and remove using a pin, there is no limitation to the number of insertion/removal times, and damage does not occur unlike the case of using the pin. Accordingly, it is possible to attach and detach repeatedly for a long time more effectively.

Further, the shapes of the front end faces 14s, 24s of the first magnets 14, 24 disposed in the optical connectors 1, 100 respectively are configured in the same shape. Therefore, by the force of the first magnet 14, 24, it is possible to bring the front end faces 14s, 24s into intimate contact with each other. By this means, it is possible to stably couple the optical coupling member 10 to the optical coupling member 20.

Particularly, in the first magnet 14 disposed in the optical connector 1, the outside shape of the front end face 14s on the optical coupling member 20 side as the coupling target is configured in the shape of a complete round with the center of the ball lens 12 as a center point. Therefore, in attaching to the magnet 24 of the optical coupling member 20, the first magnet 14 does not rotate. Therefore, it is possible to prevent the holder 11 provided with the first magnet 14 from rotating, and it is thereby possible to prevent a situation that the optical fiber 13 held by the holder 11 twists.

Further, the front end face 14s on the optical coupling member 20 side in the first magnet 14 disposed in the optical connector 1 protrudes to the front of the front end portion (end portion on the optical coupling member 20 side) of the ball lens 12. Similarly, also in the magnet 24 disposed in the optical connector 100, the cross section 24s on the optical coupling member 10 side protrudes to the front of the front end portion (end portion on the optical coupling member 10 side) of the ball lens 22. By this means, even when the front end faces 14s, 24s respectively of the first magnets 14, 24 contact each other, since the ball lenses 12, 22 do not contact each other, it is possible to prevent a situation that the surfaces of the ball lenses 12, 22 are damaged. In addition, it is preferable that a distance between the ball lenses 12, 22 is 1 mm or less when the first magnets 14, 24 contact each other. By this means, it is possible to suppress decreases in propagation efficiency of light inside the optical fiber 13.

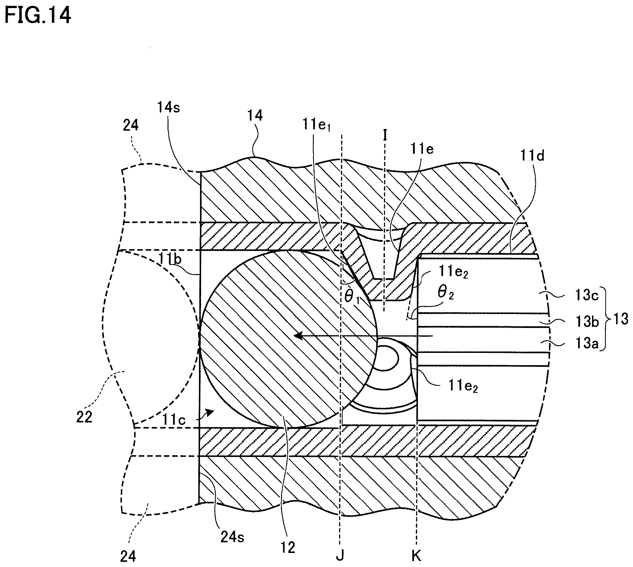

In addition, the arrangement relationship between the front end faces 14s, 24s of the first magnets 14, 24 and the ball lenses 12, 22 is not limited to the foregoing. Another arrangement relationship will be described below with reference to FIG. 14. FIG. 14 is an explanatory view of an optical coupling member according to a modification of this Embodiment. As shown in FIG. 14, the front end faces 14s, 24s of the first magnets 14, 24 and the ball lenses 12, 22 are arranged in the same position. By this means, it is possible to shorten a distance between the ball lenses 12, 22, and therefore, it is possible to avoid decreases in propagation efficiency of light inside the optical fiber 13 with increases in the gap between the ball lenses 12, 22.

Further, one of the front end faces 14s, 24s of the first magnets 14, 24 may protrude to the front of the front end portion of the ball lens 12 or 22, and the other one of the front end faces 14s, 24s of the first magnets 14, 24 may be arranged in the same position as the front end portion of the ball lens 12 or 22. In addition, also in such a case, it is preferable that a distance between the ball lenses 12, 22 is 1 mm or less when the first magnets 14, 24 contact each other. By this means, it is possible to suppress decreases in propagation efficiency of light inside the optical fiber 13.

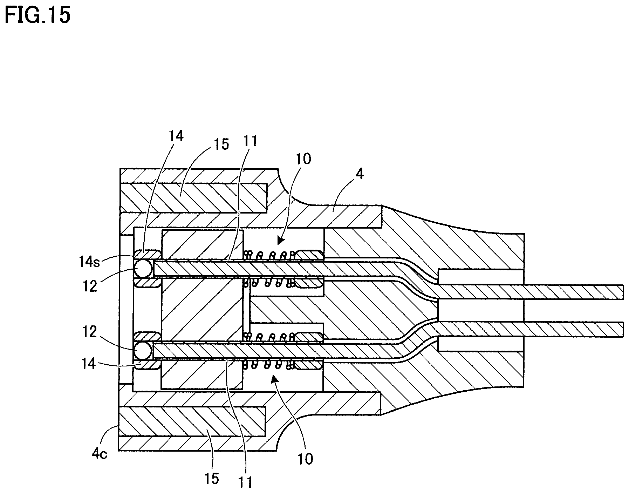

Furthermore, in this Embodiment, as shown in FIG. 6B, the front end face (end portion on the coupling target side) 14s of the first magnet 14 of the optical coupling member 10 is in the same position as the front end face 4c of the case 4. By this means, as shown in from FIGs. 8A and 8B to FIG. 9A and 9B, it is easy to configure that the first magnets 14, 24 are first connected, and that the second magnets 15, 25 are next connected. In addition, the arrangement is not limited thereto, and as shown in FIG. 15, the front end face (end portion on the coupling target side) 14s of the first magnet 14 of the optical coupling member 10 may be slightly retracted from the front end face 4c of the case 4. By this means, in the initial state, the lens 12 and first magnet 14 are in a state of being protected inside the case 4, and it is possible to prevent a situation that surfaces of the lens 12 and first magnet 14 are damaged which is caused by unintentional contact and the like. Further, also in the configuration that the front end face 14s of the first magnet 14 is retracted from the front end face 4c of the case 4, by adjusting the magnetic forces of the first magnet 14 and second magnet 15 and retract dimension, it is also possible to connect the first magnets 14, 24 first, and next, connect the second magnets 15, 25.

In addition, in the optical coupling members 10, 20 according to the above-mentioned Embodiment, the case is described where the optical coupling members 10 and 20 are coupled by the force generated by the first magnets 14, 24. However, the configuration of the optical coupling member 10 is not limited thereto. It is preferable as the Embodiment strengthening coupling of the optical coupling members 10 and 20 or making the optical coupling members 10 and 20 easy to couple.

Further, in this Embodiment, as shown in FIGs. 2, 6B, etc. the coil spring 7 is provided as the biasing member for biasing the first magnet 14 protruding to the front end side of the guide member 2 to the direction of the front end face 2b of the guide member 2. Specifically, the coil spring 7 is an extension coil spring that connects between the rear end face 2c of the guide member 2 and the front end face 6a of the stopper member 6 provided in the optical coupling member 10, at the rear of the rear end face 2c of the guide member 2. Furthermore, the biasing force of the coil spring 7 is set to be weaker than the magnetic force acting on the first magnet 24 that is the coupling target of the first magnet 14. By this means, by the magnetic force acting between the first magnets 14, 24 due to connection of the optical connectors 1, 100, the first magnet 14 of the optical coupling member 10 shifts forward from the initial position in which the magnet is brought into contact with the front end surface 2b of the guide member 2, and the optical coupling members 10, 20 are properly connected. Still furthermore, when the optical connectors 1, 100 are separated from the connection state of the optical connectors 1, 100, the first magnets 14, 24 are separated, and at this point, by the biasing force of the coil spring 7, the first magnet 14 of the optical coupling member 10 properly returns to the initial position of being brought into contact with the front end face 2b of the guide member 2.

In the above-mentioned Embodiment, the coil spring 7 is used as the biasing member to return the optical coupling member 10 to the initial position by release of the coupling state of the optical coupling members 10, 20, and as well as the coil spring 7, rubber and the like may be used as an elastic body. In this way, by using the elastic body as the biasing member, it is possible to apply the biasing force to the optical coupling member 10 with ease.

Further, in the above-mentioned Embodiment, the coil spring 7 is provided between the rear end face 2c of the guide member 2 and the front end face 6a of the stopper member 6, and an elastic body such as the coil spring 7 may be connected between the front end face 2b of the guide member 2 and the rear end face of the first magnet 14.

In addition, it is preferable that the biasing member is disposed on the rear end side of the guide member 2. On the rear end side of the guide member 2, there is wide space, as compared with the front end side, and therefore, it is possible to place the biasing member effortlessly. Further, as the initial position of the first magnet 14, it is possible to obtain a state of coming into contact with the front end face 2b of the guide member 2.

Alternatively, as a substitute for the configuration using the coil spring 7, for example, such a configuration may be made that portions are respectively provided between the front portion 5a of the cap 5 and the optical coupling member 10 shown in FIGs. 6A and 6B, at the rear of the guide member 2, and that the initial state shown in FIG. 6B is held by attachment of the portions. For example, one of the portions is made of a magnet, and the other portion is formed of a magnetic metal material. It is also possible to form both of the portions of magnets. In addition, as in the case where the coil spring 7 is disposed, when the optical connectors 1, 100 are connected, the force (biasing force) generated between the portions is weaker than the magnetic force generated between the first magnets 14, 24. Therefore, when the optical connectors 1, 100 are connected, the first magnets 14, 24 of the optical coupling member 10, 20 suitably attract each other to perform attachment accompanied by positioning operation, and by separating the connected optical connectors 1, 100 by an operator or the like, it is possible to return the optical coupling member 10, 20 to the original initial positions by the force between the portions.

In addition, the present invention is not limited to the above-mentioned Embodiment, and is capable of being carried into practice with various modifications, which fall under the scope of the claims. In the above-mentioned Embodiment, the sizes, shapes and the like shown in the accompanying drawing are not limited thereto, and are capable of being modified as appropriate within the scope of exhibiting the effects of the invention as defined by the claims. Moreover, the invention is capable of being carried into practice with modifications thereof as appropriate without departing from the object of the invention as defined by the claims.

For example, in the above-mentioned Embodiment, the case is described where the lens provided in the optical coupling member 10 is comprised of the ball lens 12. However, the lens applied to the optical coupling member 10 is not limited to the ball lens 12, and is capable of being modified as appropriate. For example, based on the premise that it is possible to properly couple propagated light between the connector and the coupling target, it is possible to apply any lenses such as a convex lens and concave lens.

Furthermore, in the above-mentioned Embodiment, the case is described where the first magnet 14 provided in the optical coupling member 10 has the cylindrical shape. However, the shape of the first magnet 14 provided in the optical coupling member 10 is not limited thereto, and is capable of being modified as appropriate. For example, in the relationship with a magnet provided in the coupling target, based on the premise that it is possible to align the center of the ball lens 12 with the center of an optical element on the coupling target side, any shapes are capable of being made. For example, the first magnet 14 may be formed of a cylindrical body with the cross-sectional shape of a polygon. Further, instead of the shape of surrounding the entire periphery of the front end portion of the holder 11, the first magnet 14 may be in the shape that the magnet is disposed on a part thereof. Furthermore, instead of the plane shape in cross section of the front end portion, the first magnet 14 may have a concavo-convex shape.

Still furthermore, in the above-mentioned Embodiment, as an example, the case is described where the optical coupling member 20 having the same configuration is coupled as the coupling target of the optical coupling member 10. However, the coupling target of the optical coupling member 10 is not limited thereto, and is capable of being modified as appropriate. For example, the optical coupling member 10 is capable of being coupled to a coupling target that does not include a lens as an optical element, a coupling target provided with a magnet 24 having a different cross-sectional shape, and a coupling target provided with a magnetic body as a substitute for the magnet 24. Further, the optical connector on the coupling target side may be fixed, or may not be fixed. Furthermore, in this Embodiment, it is possible to connect optical connectors in face, and for example, this Embodiment is also applicable to connectors constituting a male type and female type.

Moreover, in this Embodiment, the guide member 2 is presented as the shift regulation member for the optical coupling member, but such a member is not limited to the guide member 2. For example, the periphery of the holder 11 of the optical coupling member is covered with a flexible resin layer such as an elastomer to make a state in which the first magnet 14 protrudes to the front end side of the resin layer. The resin layer has flexibility that does not inhibit alignment operation of the optical coupling member with the coupling target. Accordingly, the resin layer is capable of functioning as the shift regulation member for allowing the optical coupling member to perform alignment operation with the coupling target, while regulating so that the optical coupling member does not shift more than the alignment operation. Also by this means, it is possible to improve propagation efficiency of light inside the optical fiber, without needing complicated coupling work. In addition, by adopting the configuration where the guide member having the guide groove is used as the shift regulation member and the holder of the optical coupling member is disposed in the guide groove, it is possible to accurately regulate a range of alignment operation of the optical coupling member with the coupling target, it is further possible to perform alignment of the optical coupling member inside the optical connector, only by placing the holder of the optical coupling member in the guide groove of the guide member, and it is possible to facilitate assembly operation of the optical coupling member.

In addition, the optical connector in this Embodiment is used for electric connectors supporting USB (Universal Serial Bus) specifications, electric connectors supporting HDMI (High-Definition Multimedia Interface) specifications (HDMI is the Registered Trademark), electric connectors supporting Thunderbolt (Registered Trademark) specifications, electric connectors supporting Ethernet specifications (Ethernet is the Registered Trademark), and the like. Further, it is possible to use as a power supply connector. In the power supply connector, a configuration is made so that after the optical coupling member for ground is first coupled to the optical coupling member for ground as the coupling target, remaining optical coupling members are later coupled. For example, by changing the biasing force of the coil spring or the like as the biasing member attached to each of optical coupling members for each optical coupling member, or changing the magnetic force of the magnet, it is possible to shift coupling timing not to be the same timing.

Finally, features in the above-mentioned Embodiment will be summarized.

The optical connector of the present invention is characterized by having an optical coupling member provided with a hold member where a storage portion to store a lens is formed at one end, and an insertion hole to insert an optical fiber is formed at the other end, and a first member which is provided outside in a direction crossing a storage direction of the lens at one end of the hold member, and generates a force to align the center of the lens with the center of an optical element provided in a coupling target, a shift regulation member which regulates a shift of the optical coupling member, while permitting alignment operation of the optical coupling member with the coupling target, and a case in which is formed storage space with an opening on the coupling target side for storing the optical coupling member and the shift regulation member, and which is provided with a second member for generating a force to an end face on the coupling target side positioned outside the optical element, on an end face opposed to the coupling target outside the opening crossing the storage direction.

According to the above-mentioned optical connector, it is possible to improve accuracy of alignment with the coupling target by the forces of the first member provided in the optical coupling member, and the second member provided in the end face of the case. In addition thereto, by the shift regulation member, it is possible to regulate the shift of the optical coupling member more than alignment operation with the coupling target. By this means, only by bringing the optical connector close to the optical target, it is possible to align the center of the lens with the center of the optical element provided in the coupling target with ease. From the foregoing, without needing complicated coupling work, it is possible to improve accuracy of alignment with the coupling target, and it is possible to improve propagation efficiency of light inside the optical fiber.

Further, the above-mentioned optical connector is configured so that the force is not generated in inversely attaching to the coupling target. By this means, it is possible to prevent a malfunction such that connection to the coupling target is made in an erroneous direction.

According to the invention, in the above-mentioned optical connector, pluralities of first members and second members are provided, and each of the first members and the second members is comprised of a magnet having a magnetic pole different from those of the remaining first members and second members. By this means, with a simplified configuration, it is possible to provide the inverse attachment preventing function with respect to the coupling target.

Still furthermore, in the above-mentioned optical connector, it is preferable that the force of the first member is stronger than the force of the second member. By this means, in alignment with the coupling target, it is possible to use the second member accessorily, and it is possible to perform alignment of centers of the lens and optical element by the first member with higher accuracy.

Moreover, in the above-mentioned optical connector, it is preferable that the first member and the second member are configured so that the first member first attaches to the coupling target, and that the second member next attaches to the coupling target. By this means, misregistration is hard to occur in aligning centers of the lens and optical element by the first member, and it is possible to perform alignment of high accuracy.

Further, in the above-mentioned optical connector, it is preferable that the end portion on the coupling target side of the optical coupling member is disposed in the same position as the end face of the case, or in a position retracted from the end face of the case. By this means, it is possible to perform face connection on the end face of the case. Further, in the configuration where the end portion on the coupling target side of the optical coupling member is disposed in the same position as the end face of the case, it is easy to configure so that the first member first attaches and that the second member next attaches as described above. Furthermore, in the configuration where the end portion on the coupling target side of the optical coupling member is retracted from the end face of the case, it is possible to prevent a situation that surfaces of the lens and first magnet are damaged which is caused by unintentional contact and the like.

Furthermore, in the above-mentioned optical connector, it is preferable that the shift regulation member is locked on the opening side in the storage space, and is supported to be allowed to shift in the storage direction. By this means, it is possible to allow the shift regulation member to shift within a predetermined range in aligning with the coupling target, and it is possible to perform alignment of the center of the lens of the optical coupling member and the center of the optical element of the coupling target with high accuracy.

Still furthermore, in the above-mentioned optical connector, it is preferable that the shift regulation member has a guide groove provided from one end to the other end that is the storage direction of the lens, in the optical coupling member the hold member is disposed in the guide groove in a state in which the first member protrudes from one end side of the shift regulation member, a clearance is provided between the hold member and the guide groove, and that the first member is allowed to perform the alignment operation on one end side of the shift regulation member. By this means, the optical coupling member is capable of shifting in the direction to couple to the coupling target through the guide member. At this point, the optical coupling member has the clearance between the member and the guide member in the direction crossing the extension direction of the guide member. Accordingly, the optical coupling member is allowed to perform alignment operation with the coupling target in three axis directions, and it is thereby possible to properly align the center of the lens of the optical coupling member and the center of the optical element of the coupling target.

Moreover, in the above-mentioned optical connector, it is preferable that a biasing member is provided to bias the first member to one end face side of the shift regulation member, and that a biasing force of the biasing member is weaker than the force to the coupling target in the first member. By this means, coupling between the optical coupling member and the coupling target is not inhibited because the force of the first member is stronger than the biasing force of the biasing member, and on the other hand, when coupling between the optical coupling member and the coupling target is released (when the optical coupling member is separated from the coupling target), by the biasing force of the biasing member, it is possible to return the first member to the original position prior to coupling.

According to the present invention, without needing complicated coupling work, it is possible to improve coupling accuracy, and it is possible to improve propagation efficiency of light inside the optical fiber.

## Claims

1. An optical connector (1) connectable to a coupling target (100), the optical connector (1) comprising:
a plurality of optical coupling members (10), each of which is provided with:
a hold member (11) including a lens (12), an optical fiber (13) and a storage portion (11c), configured to store the lens (12), which is formed at one end of the hold member (11) facing the coupling target (100), and an insertion hole (11a), into which the optical fiber (13) is inserted, at the other end of the hold member (11), and
a first member (14) provided on an outer periphery at one end portion of the hold member (11) facing the coupling target (100) and configured to generate a force to align a center of the lens (12) with a center of an optical element provided in the coupling target (100);
the optical connector (1) further comprising
a shift regulation member (2), configured to regulate a shift of the plurality of optical coupling members (10), while permitting an alignment operation of the plurality of optical coupling members (10) with the coupling target (100); and
a case (4), in which is formed a storage space (4a) with an opening on the coupling target side for storing the optical coupling member (10) and the shift regulation member (2), provided with a plurality of second members (15) configured to generate a force to an end face on the coupling target side positioned outside the optical element, on an end face (4c) of the case (4) facing the coupling target (100) and positioned at an outer periphery of the opening,
wherein each of the first members (14) is respectively comprised of a magnet, wherein the magnet of at least one of the first members (14) has a magnetic pole that is different from those of the remaining magnets of the first members (14), **characterized in that**
each of the second members (15) is respectively comprised of a magnet, wherein the magnet of at least one of the second members (15) has a magnetic pole that is different from those of the remaining magnets of the second members (15).

2. The optical connector (1) according to claim 1, wherein the force of the first member (14) is stronger than the force of the second member (15).

3. The optical connector (1) according to claim 1 or 2, wherein the first member (14) and the second member (15) are configured so that the first member (14) first attaches to the coupling target (100), and that the second member (15) next attaches to the coupling target (100).

4. The optical connector (1) according to any one of claims 1 to 3, wherein an end portion on the coupling target side of the optical coupling member (10) is disposed in the same position as the end face (4c) of the case (4), or in a position retracted from the end face (4c) of the case (4).

5. The optical connector (1) according to any one of claims 1 to 4, wherein the shift regulation member (2) comprises a guide groove (8) extending linearly from one end to the other end in the storage direction of the lens,
wherein the hold member (11) of the optical coupling member (10) is disposed in the guide groove (8) in a state in which the first member (14) protrudes from one end side of the shift regulation member (2), a clearance is provided between the hold member (11) and the guide groove (8), and the first member (14) is allowed to perform the alignment operation on one end side of the shift regulation member (2).

## Patentansprüche

1. Optischer Verbinder (1), der mit einem Koppelziel (100) verbindbar ist, wobei der optische Verbinder (1) aufweist:
mehrere optische Koppelteile (10), die jeweils versehen sind mit:
einem Halteteil (11) mit einer Linse (12), einer optischen Faser (13) und einem Aufnahmeabschnitt (11c), der so konfiguriert ist, dass er die Linse (12) aufnimmt, und der an einem zum Koppelziel (100) weisenden Ende des Halteteils (11) gebildet ist, und einem Einführloch (11a), in das die optische Faser (13) eingeführt ist, am anderen Ende des Halteteils (11) und
einem ersten Teil (14), das auf einem Außenumfang an einem zum Koppelziel (100) weisenden Endabschnitt des Halteteils (11) vorgesehen und so konfiguriert ist, dass es eine Kraft erzeugt, um eine Mitte der Linse (12) zu einer Mitte eines im Koppelziel (100) vorgesehenen optischen Elements auszurichten;
wobei der optische Verbinder (1) ferner aufweist:
ein Verschiebungsregulierteil (2), das so konfiguriert ist, dass es eine Verschiebung der mehreren optischen Koppelteile (10) reguliert, während es einen Ausrichtvorgang der mehreren optischen Koppelteile (10) zum Koppelziel (100) ermöglicht; und
ein Gehäuse (4), in dem ein Aufnahmeraum (4a) mit einer Öffnung auf der Koppelzielseite zum Aufnehmen des optischen Koppelteils (10) und des Verschiebungsregulierteils (2) gebildet ist, das mit mehreren zweiten Teilen (15) versehen ist, die so konfiguriert sind, dass sie eine Kraft auf eine Endfläche auf der Koppelzielseite ausüben, und die außerhalb des optischen Elements auf einer zum Koppelziel (100) weisenden Endfläche (4c) des Gehäuses (4) positioniert und an einem Außenumfang der Öffnung positioniert sind,
wobei jedes der ersten Teile (14) jeweils einen Magneten aufweist, wobei der Magnet mindestens eines der ersten Teile (14) einen Magnetpol hat, der sich von denen der übrigen Magnete der ersten Teile (14) unterscheidet,
**dadurch gekennzeichnet, dass** jedes der zweiten Teile (15) jeweils einen Magneten aufweist, wobei der Magnet mindestens eines der zweiten Teile (15) einen Magnetpol hat, der sich von denen der übrigen Magnete der zweiten Teile (15) unterscheidet.

2. Optischer Verbinder (1) nach Anspruch 1, wobei die Kraft des ersten Teils (14) stärker als die Kraft des zweiten Teils (15) ist.

3. Optischer Verbinder (1) nach Anspruch 1 oder 2, wobei das erste Teil (14) und das zweite Teil (15) so konfiguriert sind, dass das erste Teil (14) zuerst am Koppelziel (100) anhaftet und dass das zweite Teil (15) danach am Koppelziel (100) anhaftet.

4. Optischer Verbinder (1) nach einem der Ansprüche 1 bis 3, wobei ein Endabschnitt auf der Koppelzielseite des optischen Koppelteils (10) an der gleichen Position wie die Endfläche (4c) des Gehäuses (4) oder an einer Position angeordnet ist, die von der Endfläche (4c) des Gehäuses (4) zurückversetzt ist.

5. Optischer Verbinder (1) nach einem der Ansprüche 1 bis 4, wobei das Verschiebungsregulierteil (2) eine Führungsnut (8) aufweist, die sich von einem Ende zum anderen Ende in Aufnahmerichtung der Linse geradlinig erstreckt,
wobei das Halteteil (11) des optischen Koppelteils (10) in der Führungsnut (8) in einem Zustand angeordnet ist, in dem das erste Teil (14) von einer Endseite des Verschiebungsregulierteils (2) vorsteht, ein Spalt zwischen dem Halteteil (11) und der Führungsnut (8) vorgesehen ist und das erste Teil (14) den Ausrichtvorgang auf einer Endseite des Verschiebungsregulierteils (2) durchführen kann.

## Revendications

1. Connecteur optique (1) pouvant être connecté à une cible de couplage (100), le connecteur optique (1) comprenant :
une pluralité d'éléments de couplage optique (10), qui sont pourvus chacun :
d'un élément de support (11) comprenant une lentille (12), une fibre optique (13) et une partie de stockage (11c), configurée pour stocker la lentille (12), qui est formée à une extrémité de l'élément de support (11) faisant face à la cible de couplage (100), et un orifice d'insertion (11a), dans lequel la fibre optique (13) est insérée, à l'autre extrémité de l'élément de support (11), et
un premier élément (14) prévu sur une périphérie extérieure au niveau d'une partie d'extrémité de l'élément de support (11) faisant face à la cible de couplage (100) et configuré pour générer une force pour aligner un centre de la lentille (12) avec un centre d'un élément optique prévu dans la cible de couplage (100) ;
le connecteur optique (1) comprenant en outre un élément de régulation de décalage (2), configuré pour réguler un décalage de la pluralité d'éléments de couplage optique (10), tout en permettant une opération d'alignement de la pluralité d'éléments de couplage optique (10) avec la cible de couplage (100) ; et
un boîtier (4), dans lequel est formé un espace de stockage (4a) avec une ouverture côté cible de couplage pour stocker l'élément de couplage optique (10) et l'élément de régulation de décalage (2), pourvu d'une pluralité de deuxièmes éléments (15) configurés pour générer une force vers une face d'extrémité côté cible de couplage et positionnés à l'extérieur de l'élément optique, sur une face d'extrémité (4c) du boîtier (4) faisant face à la cible de couplage (100) et positionnés au niveau d'une périphérie extérieure de l'ouverture,
dans lequel chacun des premiers éléments (14) est respectivement composé d'un aimant, dans lequel l'aimant d'au moins l'un des premiers éléments (14) a un pôle magnétique qui est différent de ceux des aimants restants des premiers éléments (14), **caractérisé en ce que**
chacun des deuxièmes éléments (15) est respectivement composé d'un aimant, dans lequel l'aimant d'au moins l'un des deuxièmes éléments (15) a un pôle magnétique qui est différent de ceux des aimants restants des deuxièmes éléments (15).

2. Connecteur optique (1) selon la revendication 1, dans lequel la force du premier élément (14) est plus grande que la force du deuxième élément (15).

3. Connecteur optique (1) selon la revendication 1 ou 2, dans lequel le premier élément (14) et le deuxième élément (15) sont configurés de sorte que le premier élément (14) s'attache d'abord à la cible de couplage (100), et que le deuxième élément (15) s'attache ensuite à la cible de couplage (100).

4. Connecteur optique (1) selon l'une quelconque des revendications 1 à 3, dans lequel une partie d'extrémité côté cible de couplage de l'élément de couplage optique (10) est disposée à la même position que la face d'extrémité (4c) du boîtier (4), ou à une position rétractée par rapport à la face d'extrémité (4c) du boîtier (4).

5. Connecteur optique (1) selon l'une quelconque des revendications 1 à 4, dans lequel l'élément de régulation de décalage (2) comprend une rainure de guidage (8) s'étendant linéairement d'une extrémité à l'autre extrémité dans la direction de stockage de la lentille,
dans lequel l'élément de support (11) de l'élément de couplage optique (10) est disposé dans la rainure de guidage (8) dans un état dans lequel le premier élément (14) dépasse d'un côté d'extrémité de l'élément de régulation de décalage (2), un jeu est prévu entre l'élément de support (11) et la rainure de guidage (8), et le premier élément (14) est autorisé à effectuer l'opération d'alignement sur un côté d'extrémité de l'élément de régulation de décalage (2).
